# EUROPEAN PATENT APPLICATION

(11) **EP 4 372 900 A1**
(43) Date of publication of application: **22.05.2024**
(21) Application number: 22841907.3
(22) Date of filing: 24.06.2022
(51) Int. Cl.: H01M 50/55, H01M 50/107, H01M 50/152, H01M 50/184, H01M 50/188, H01M 50/547, H01M 50/559, H01M 50/588

(54) **CYLINDRICAL BATTERY**

(30) Priority: 14.07.2021 JP 2021116223
(71) Applicant: Panasonic Energy Co., Ltd., Osaka 570-8511 (JP)
(72) Inventor: HARAGUCHI, Shin, Kadoma-shi, Osaka 571-0057 (JP); KUSANO, Takumi, Kadoma-shi, Osaka 571-0057 (JP); OKUTANI, Oose, Kadoma-shi, Osaka 571-0057 (JP)
(74) Representative: Novagraaf International SA
(86) International application number: PCT/JP2022/025254
(87) International publication number: WO 2023/286563

(57) **Abstract**

A cylindrical battery exemplifying one embodiment comprises an electrode assembly, a bottomed cylindrical external can that accommodates the electrode assembly, a sealing assembly that blocks an opening of the external can, a gasket that is interposed between the external can and the sealing assembly, and an external terminal plate that is joined to the outer surface of the external can. The external terminal plate is a metal plate having a thick portion and a thin portion, and the thin portion is joined to an open edge of the external can.

## Description

### TECHNICAL FIELD

The present disclosure relates to a cylindrical battery.

### BACKGROUND ART

A cylindrical battery typically includes a wound electrode assembly, a bottomed cylindrical external can that accommodates the electrode assembly, and a sealing assembly that seals an opening of the external can. The external can has an opening edge that is bent inward to form a crimping portion that presses the sealing assembly through a gasket. The cylindrical battery is shock-resistant and easy to modularize, and in applications requiring large capacities, multiple cylindrical batteries are electrically connected to form a module. In this case, the cylindrical batteries are bonded to each other with leads to the external terminals of the cylindrical batteries by laser welding or other means (see, for example, Patent Literature 1).

For example, in the cylindrical battery, the sealing assembly serves as a positive external terminal and the external can serves as a negative external terminal. Patent Literature 1 discloses a battery-to-battery connection device that connects the top surface of the sealing assembly of a first cylindrical battery to the bottom of the external can of a second cylindrical battery. In some cases, a current collecting terminal on the negative electrode side is welded to the crimping portion, which is located in close proximity to the sealing assembly, in the external can serving as the negative external terminal (see, for example, Patent Literature 2). In this case, each of the positive and negative current collecting terminals can be disposed at one end side of the cylindrical battery in the axial direction, thus allowing, for example, downsizing of the battery module.

### CITATION LIST

PATENT LITERATURE 1: JP 2006-261083 A
PATENT LITERATURE 2: JP 2018-525793 A

### SUMMARY

### TECHNICAL PROBLEM

When the leads are welded to the crimping portion of the external can in modularization of cylindrical batteries, it is not easy to ensure a good and stable connection of the leads. To stabilize the connection of the leads, the radial length of the crimping portion may be increased to enlarge the bonding area, but in this case, the sealing assembly is strongly compressed by the crimping portion and easily deformed. As a result, the operating pressure of a safety valve installed in the sealing assembly may vary widely, or the connecting position may not be stable when connecting the leads to the sealing assembly.

### SOLUTION TO PROBLEM

A cylindrical battery according to the present disclosure includes an electrode assembly, a bottomed cylindrical external can that accommodates the electrode assembly, a sealing assembly that blocks an opening of the external can, a gasket that is interposed between the external can and the sealing assembly, and an external terminal plate that is bonded to the outer surface of the external can, in which the external terminal plate is a metal plate having a thick portion and a thin portion, and the thin portion is bonded to an open edge of the external can.

### ADVANTAGEOUS EFFECTS OF INVENTION

The cylindrical battery according to the present disclosure achieves a stable connection of leads in modularization while suppressing deformation of the sealing assembly.

### BRIEF DESCRIPTION OF DRAWINGS

FIG. 1 is a cross-sectional view of an example of a cylindrical battery according to an embodiment.
FIG. 2 is a plan view of an example of a cylindrical battery according to the embodiment.
FIG. 3 is an enlarged view of portion A in FIG. 1.
FIG. 4 illustrates a variation of an external terminal plate.
FIG. 5 illustrates a variation of the external terminal plate.
FIG. 6 illustrates a variation of the external terminal plate.

### DESCRIPTION OF EMBODIMENTS

In the following, an example of an embodiment of a cylindrical battery according to the present disclosure is described in detail with reference to the attached drawings. A cylindrical battery according to the present disclosure is not limited to the embodiment described below, and the present disclosure also covers the configurations implemented by selectively combining the embodiment and multiple variations described below.

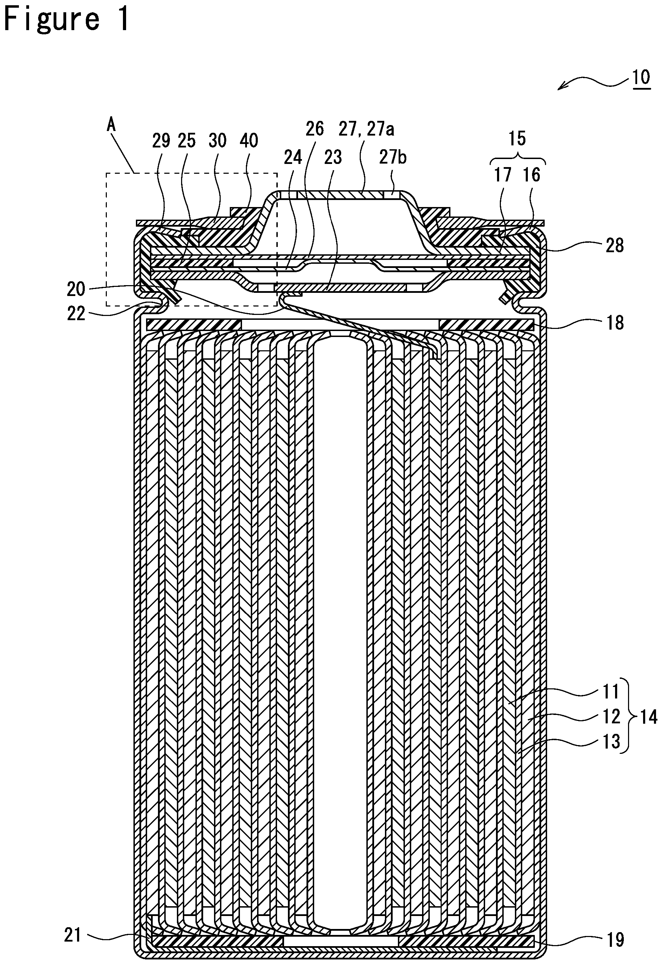

FIG. 1 is a cross-sectional view of a cylindrical battery 10, which is an example of an embodiment. As illustrated in FIG. 1, the cylindrical battery 10 includes an electrode assembly 14, a bottomed cylindrical external can 16 that accommodates the electrode assembly 14, and a sealing assembly 17 that blocks an opening of the external can 16. The external can 16 contains electrolyte along with the electrode assembly 14. The electrolyte may be an aqueous electrolyte, but a non-aqueous electrolyte is used in this embodiment. The external can 16 has a grooved portion 22 formed in the side wall, and the sealing assembly 17 is supported by the grooved portion 22 to seal the opening of the external can 16. The external can 16 and the sealing assembly 17 constitute a case 15 having a substantially cylindrical shape as a whole. For convenience of explanation, the sealing assembly 17 side of the cylindrical battery 10 will be referred to as the upper side, and the bottom side of the external can 16 will be referred to as the lower side.

The cylindrical battery 10 further includes a gasket 28 interposed between the external can 16 and the sealing assembly 17. The gasket 28 is a ring-shaped resin member attached to the outer periphery of the sealing assembly 17 to ensure insulation between the external can 16 and the sealing assembly 17. The gasket 28 blocks the gap between the external can 16 and the sealing assembly 17 to seal the inside of the battery. The gasket 28 is made of polyolefin, for example.

The cylindrical battery 10 further includes an external terminal plate 30 bonded to the outer surface of the external can 16. The external terminal plate 30 is, for example, a conductive member to which a lead is connected to electrically connect multiple cylindrical batteries 10 to each other when they are modularized. As will be described in detail later, the external terminal plate 30 is disposed on the upper surface of the case 15 and welded to the outer surface of the external can 16. The external terminal plate 30 is made of, for example, a metal mainly composed of iron. For the lead, a metal plate or metal wire can be used, for example.

The non-aqueous electrolyte contains a non-aqueous solvent and electrolyte salts dissolved in the non-aqueous solvent. For the nonaqueous solvent, for example, esters, ethers, nitriles, amides, or mixtures of two or more of these solvents can be used. The non-aqueous solvent may include halogen substitutes in which at least a portion of the hydrogen of the solvent is substituted by halogen atoms such as fluorine. Examples of the non-aqueous solvent include ethylene carbonate (EC), ethyl methyl carbonate (EMC), dimethyl carbonate (DMC), and mixtures of these solvents. Lithium salts such as LiPF₆ are used as electrolyte salts. The non-aqueous electrolyte is not limited to the liquid electrolyte, but can also be a solid electrolyte.

The electrode assembly 14 includes a positive electrode 11, a negative electrode 12, and a separator 13, and has a wound structure in which the positive electrode 11 and the negative electrode 12 are spirally wound via the separator 13. The positive electrode 11, the negative electrode 12, and the separator 13 are all strip-like long bodies, wound spirally and alternately stacked in the radial direction of the electrode assembly 14. The negative electrode 12 is formed with one size larger than the positive electrode 11 to prevent lithium precipitation. That is, the negative electrode 12 is formed longer in the longitudinal and width directions than the positive electrode 11. The separator 13 is formed at least one size larger than the positive electrode 11, and, for example, is provided in two pieces so as to sandwich the positive electrode 11.

The positive electrode lead 20 and the negative electrode lead 21 are connected to the electrode assembly 14. In this embodiment, the positive electrode lead 20 electrically connects the positive electrode 11 to the sealing assembly 17, and the negative electrode lead 21 electrically connects the negative electrode 12 to the external can 16. The sealing assembly 17 functions as a positive external terminal, and the external terminal plate 30 bonded to the external can 16 functions as a negative external terminal. In the example illustrated in FIG. 1, the positive electrode lead 20 extends through the opening of the insulating plate 18 to the sealing assembly 17 side, and the negative electrode lead 21 extends along the outside of the insulating plate 19 to the bottom of the external can 16.

The positive electrode 11 includes a positive electrode core and a positive electrode mixture layer formed on at least one side of the core. The positive electrode core can be made of, for example, a foil of a metal that is stable in the potential range of the positive electrode 11, such as aluminum or aluminum alloy, or a film with such a metal placed on the surface layer. The positive electrode mixture layer includes a positive electrode active material, a conductive agent such as acetylene black, and a binding agent such as polyvinylidene fluoride (PVdF), and is preferably formed on both sides of the positive electrode core. The positive electrode active material is, for example, a lithium transition metal composite oxide containing Ni, Co, Mn, Al, or the like. The positive electrode lead 20 is connected to the positive electrode 11, and is preferably bonded directly to the positive electrode core by ultrasonic welding or other means.

The negative electrode 12 includes a negative electrode core and a negative electrode mixture layer formed on at least one side of the core. The negative electrode core can be made of, for example, a foil of a metal that is stable within the potential range of the negative electrode 12, such as copper or copper alloy, or a film with such a metal placed on the surface layer. The negative electrode mixture layer contains the negative electrode active material and a binding agent such as styrene-butadiene rubber (SBR), PVdF, or the like, and is preferably formed on both sides of the negative electrode core. For example, graphite, silicon-containing compounds, or the like is used as the negative electrode active material. The negative electrode lead 21 is preferably bonded directly to the negative electrode core by ultrasonic welding or other means. It is also possible to electrically connect the negative electrode 12 to the external can 16 by bringing the negative electrode core into contact with the inner surface of the external can 16.

The external can 16 is a bottomed cylindrical metal container with an opening at one end (top end) in the axial direction, having a cylindrically formed side wall and a bottom having a circular shape in plan view. The external can 16 is generally made of a metal mainly composed of iron, but may also be made of a metal mainly composed of aluminum or the like. The sidewall of the external can 16 have the grooved portion 22 annularly formed along the entire circumferential length of the sidewall. The grooved portion 22 is a portion of the sidewall that protrudes inward of the external can 16, and is formed, for example, by spinning the sidewall from the outside. The grooved portion 22 is formed at a predetermined length away from the top edge of the external can 16. The predetermined length is, for example, a length corresponding to 1% to 20% of the axial length of the external can 16.

The sealing assembly 17 is secured to the opening edge of the external can 16 by being held between the grooved portion 22 and a crimping portion 29. In this embodiment, the crimping portion 29 is formed at the top end of the external can 16. The crimping portion 29 is the portion crimped against the sealing assembly 17 disposed on the grooved portion 22 where the top end portion of the external can 16 is bent inward. The crimping portion 29 is formed in an annular shape along the circumferential direction of the external can 16. The crimping portion 29 is inclined, for example, with respect to the radial direction of the external can 16 so that the distance from the upper surface of the sealing assembly 17 becomes closer from the radially outside toward the inside of the external can 16. As will be described in detail later, the gasket 28 is strongly compressed by the crimping portion 29, and a portion of the gasket 28 extends from between the crimping portion 29 and the sealing assembly 17 to the central axis side of the case 15.

The sealing assembly 17 has a structure in which an internal terminal plate 23,a lower valve member 24, an insulating plate 25, an upper valve member 26, and a cap 27 are stacked in this order from the electrode assembly 14 side. Each member of the sealing assembly 17 has, for example, a disc or ring shape, and the members except the insulating plate 25 are electrically connected to each other. The cap 27 has a protruding shape with the center portion protruding radially outward. A protruding portion 27a of the cap 27 has an annularly formed slope portion and a flat top surface portion surrounded by the slope portion. The top surface portion has a plurality of ventilation holes 27b.

The lower valve member 24, the insulating plate 25, and the upper valve member 26 constitute a current shutoff mechanism. The lower valve member 24 and the upper valve member 26 are connected at the center portions thereof, and the insulating plate 25 is interposed between their peripheral portions. In this case, when an abnormality occurs in the battery and the internal pressure rises, the lower valve member 24 deforms to push the upper valve member 26 up toward the cap 27 and breaks, thereby shutting off the current path between the lower valve member 24 and the upper valve member 26. When the internal pressure rises further, the upper valve member 26 breaks and a gas is discharged through the ventilation holes 27b of the cap 27.

In this embodiment, the positive electrode lead 20 is connected to the underside of the internal terminal plate 23 by welding, ultrasonic welding, or the like, and the cap 27, which is the top plate of the sealing assembly 17 electrically connected to the internal terminal plate 23, becomes the positive external terminal. The current collecting terminal on the positive electrode side is welded, for example, to the upper surface of the cap 27, more specifically to the top surface portion of the protruding portion 27a. The negative electrode lead 21 is connected to the inner surface of the bottom of the external can 16 by welding, ultrasonic welding, or the like, and the external terminal plate 30 electrically connected to the external can 16 becomes the negative external terminal. The current collecting terminal on the negative electrode side is welded, for example, to the upper surface of the external terminal plate 30.

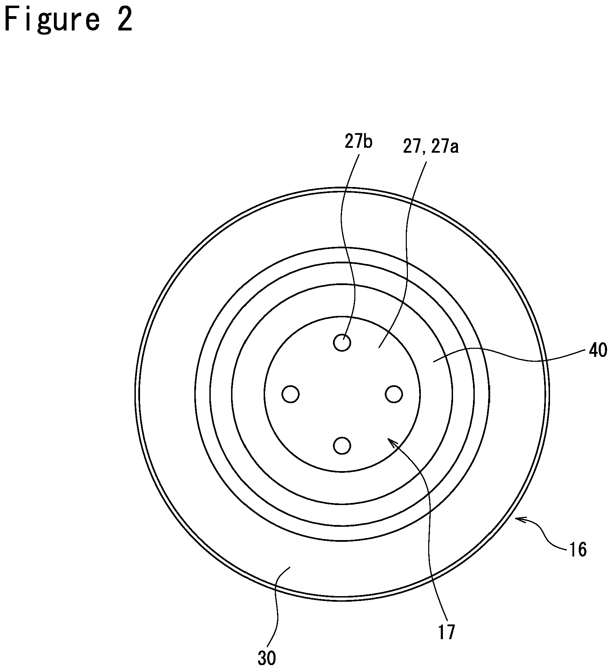

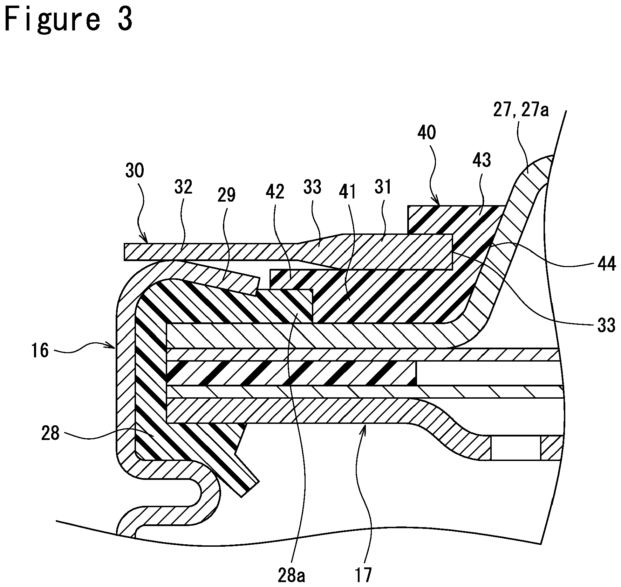

The configuration of the external terminal plate 30 and an insulating member 40 will be described in detail below, with further reference to FIGS. 2 and 3. FIG. 2 is a plan view of the cylindrical battery 10. FIG. 3 is an enlarged view of portion A in FIG. 1.

As illustrated in FIGS. 1 to 3, the cylindrical battery 10 includes the external terminal plate 30 disposed on the upper surface of the case 15 with insulation secured to the sealing assembly 17. As described above, the external terminal plate 30 is bonded to the external can 16 and functions as the negative external terminal. In the cylindrical battery 10, the cap 27 of the sealing assembly 17, which functions as the positive external terminal, and the external terminal plate 30, which functions as the negative external terminal, are both provided on the upper surface of the case 15. Therefore, when the cylindrical battery 10 is modularized, the leads can be connected to the positive external terminal or the negative external terminal disposed on the upper surface of the case 15, allowing, for example, downsizing of the module and improving productivity.

The external terminal plate 30 is a metal plate having a circular ring shape in plan view and having a thick portion 31 and a thin portion 32, with the thin portion 32 bonded to the opening edge of the external can 16. The thick portion 31 is a portion of the external terminal plate 30 with the largest thickness, and the thin portion 32 is a portion of the external terminal plate 30 with the least thickness. In this embodiment, between the thick portion 31 and the thin portion 32, an inclined portion 33 is formed with a thickness thereof gradually decreasing toward the radially outside of the external terminal plate 30.

The external terminal plate 30 is disposed on the upper surface of the case 15 without protruding radially outward from the outer peripheral surface of the external can 16. In this case, the cylindrical battery 10 can be downsized and the external terminal plate 30 can be prevented from interfering with peripheral components in the battery module. The outer diameter of the external terminal plate 30 is smaller than the outer diameter of the external can 16, and the external terminal plate 30 is disposed so as not to protrude from the upper surface of the case 15. In this embodiment, the thin portion 32 of the external terminal plate 30 is bonded to the crimping portion 29 that constitutes the outer peripheral edge of the upper surface of the case 15.

The external terminal plate 30 has an opening 34 in the radially center portion thereof. The opening 34 has, for example, a true circle shape in plan view and is formed through the external terminal plate 30 in the thickness direction. The cap 27 has the protruding portion 27a, which is in a true circle shape in plan view and protrudes upward, as described above. The opening 34 is a hole for passing the protruding portion 27a, and has a diameter, for example, larger than that of the protruding portion 27a. The protruding portion 27a protrudes upward through the opening 34, and the top surface portion of the protruding portion 27a is located at the top edge of the cylindrical battery 10.

The thick portion 31 is formed in a circular ring shape along the periphery of the opening 34 with a predetermined radial length (hereinafter sometimes referred to as "width"). The thick portion 31 is preferably formed with a substantially constant width over the entire circumferential length of the external terminal plate 30. From the inner circumferential side of the external terminal plate 30, the thick portion 31, the inclined portion 33, and the thin portion 32 are provided in this order, all of which formed in a circular ring shape. Like the thick portion 31, the thin portion 32 and the inclined portion 33 are preferably formed with a substantially constant width over the entire circumferential length of the external terminal plate 30.

The suitable thicknesses of the thick portion 31 and the thin portion 32, as well as the relationship between the thicknesses of the various portions, vary depending on the material of the external terminal plate 30 or the like, and an example ratio of the thickness of the thin portion 32 to the thickness of the thick portion 31 is from 0.5 to 0.7. For example, the external terminal plate 30 is made of iron or an iron alloy such as stainless steel. The thickness of the thick portion 31 is set in accordance with the load acting on the thick portion 31 in welding the current collecting terminal, the strength of the material, or the like. The thick portion 31 and the thin portion 32 are provided side by side in the radial direction of the external terminal plate 30, and the respective surfaces (upper and lower surfaces) are parallel to each other.

The thickness of the thin portion 32 is preferably less than or equal to the thickness of the portion of the external can 16 to which the thin portion 32 is bonded. The external can 16 and the thin portion 32 are laser-welded, for example, and by setting the thickness of the thin portion 32 to less than or equal to the thickness of the external can 16, the output of the laser can be minimized, thus effectively reducing generation of spatter and thermal effects on the gasket 28. In this embodiment, the thin portion 32 is laser welded to the crimping portion 29 of the external can 16. An example ratio of the thickness of the thin portion 32 to the thickness of the crimping portion 29 is 0.5 to 0.8.

The relationship between the thicknesses of the thick portion 31 and the crimping portion 29 is not particularly limited, but in this embodiment, the thickness of the thick portion 31 is larger than that of the crimping portion 29. In other words, there is a relationship that the thickness of the thin portion 32 < the thickness of the crimping portion 29 < the thickness of the thick portion 31. The thick portion 31 is preferably formed with a substantially constant thickness over the entire circumferential length of the external terminal plate 30. The same is true for the thin portion 32.

The inclined portion 33 is a portion whose thickness progressively decreases radially outward, and upper and lower surfaces of the inclined portion 33 are gently inclined with respect to the radial direction of the external terminal plate 30. In this case, the change in thickness of the external terminal plate 30 is gradual and no stair-like steps are formed between the thick portion 31 and the thin portion 32, thus improving the load bearing capacity of the external terminal plate 30. The upper and lower surfaces of the inclined portion 33 are inclined so that they gradually approach each other toward the outside in the radial direction.

The inclination angles of the upper and lower surfaces of the inclined portion 33 with respect to the radial direction of the external terminal plate 30 may be different from each other, but in this embodiment, they are substantially the same. The center of the thick portion 31 and the center of the thin portion 32 in the thickness direction are aligned radially in the external terminal plate 30. In this case, the upper and lower surfaces of the external terminal plate 30 have the same shape, and there is no need to distinguish between the front and back sides thereof at the time of use. This also achieves a good formability.

The radial lengths (widths) of the thick portion 31, the thin portion 32, and the inclined portion 33 are not particularly limited, but the boundary between the thin portion 32 and the inclined portion 33, in other words, the inner end of the thin portion 32 in the radial direction is preferably located closer to the central axis side of case 15 from the tip of the crimping portion 29. In this case, the bonding area of the crimping portion 29 and the thin portion 32 can be sufficiently secured, and the interference of the inclined portion 33 or the thick portion 31 with the crimping portion 29 can be more reliably prevented. In this embodiment, there is a relationship that the width of the inclined portion 33 < the width of the thick portion 31 < the width of the thin portion 32, but for example, the width of the thick portion 31 may be larger than the width of thin portion 32.

Preferably, a plurality of welds are formed between the crimping portion 29 and the external terminal plate 30 by laser welding at predetermined intervals in the circumferential direction of the external terminal plate 30. It is preferable that the predetermined intervals are substantially equal intervals. In the example illustrated in FIG. 2, four welds are formed at equal intervals in the circumferential direction, but the number of welds is not limited. The number and area of welds are set, for example, in consideration of bonding strength and resistance. In general, the larger the welding area, the higher the bonding strength and the lower the resistance. It is also possible to form the welds continuously along the circumferential direction of the external terminal plate 30.

The cylindrical battery 10 further includes the insulating member 40 disposed on the upper surface of the case 15 and prevents electrical connection between the sealing assembly 17 and the external terminal plate 30. The insulating member 40 is a resin member having a circular ring shape in plan view and disposed between the sealing assembly 17 and the external terminal plate 30. The insulating member 40 is made of polyolefin, for example. The insulating member 40 is preferably disposed closer to the central axis side of the case 15 from the tip of the crimping portion 29 across a gap from the tip of the crimping portion 29, so as not to interfere with welding between the crimping portion 29 and the external terminal plate 30 of the external can 16.

The insulating member 40 has a base portion 41 that is in contact with the upper surface of the sealing assembly 17 and the lower surface of the thick portion 31 of the external terminal plate 30. The base portion 41 is preferably formed in a flat circular ring shape and has a substantially constant width over the entire circumferential length of the insulating member 40. The thickness of the base portion 41 is not particularly limited, but in this embodiment, it is larger than the thickness of the thick portion 31. Since the base portion 41 is disposed in contact with the sealing assembly 17 and the thick portion 31 and supporting the thick portion 31, the current collecting terminal can be stably welded to the thick portion 31.

The insulating member 40 has an opening 44 in the radially center portion thereof. The opening 44 has, for example, a true circular shape in plan view and is formed penetrating through the insulating member 40 in the thickness direction. The opening 44 is a hole for passing the protruding portion 27a of the cap 27, and has a shape that allows the peripheral edge of the opening 44 to adhere along the slope of the protruding portion 27a. Preferably, the opening 44 is gradually decreasing in diameter toward the top, and the peripheral edge of the opening 44 is in contact with the slope of the protruding portion 27a over its entire circumferential length. In this case, the insulating member 40 can be disposed stably on the upper surface of the case 15.

The insulating member 40 is disposed overlapping an extending portion 28a of the gasket 28 that extends from between the crimping portion 29 and the sealing assembly 17 to the central axis side of the case 15. The insulating member 40 has a first protruding portion 42 covering the upper surface of the gasket 28. The first protruding portion 42 protrudes radially outward from the outer peripheral edge of the base portion 41 and has a circular ring shape.

The first protruding portion 42 is thinner than the insulating member 40, and the upper surface of the first protruding portion 42 is flush with the upper surface of the base portion 41. The first protruding portion 42 preferably overlaps the gasket 28 for the entire circumferential length of the insulating member 40. In this case, the entire upper surface of the sealing assembly 17 facing the external terminal plate 30 is covered by the gasket 28 and the insulating member 40, improving the insulation performance.

The insulating member 40 also has a second protruding portion 43 formed in a circular ring shape protruding upward from the inner edge of the base portion 41. The second protruding portion 43 is formed in a hook shape in cross-section so that it wraps around the upper surface of the external terminal plate 30. The second protruding portion 43 is interposed between the protruding portion 27a of the cap 27 and the inner edge of the external terminal plate 30 to prevent contact between the protruding portion 27a and the external terminal plate 30. The tip portion of the second protruding portion 43 is formed substantially parallel to the base portion 41 across a gap from the upper surface of the base portion 41. The inner periphery of the external terminal plate 30 is inserted into the gap formed between the base portion 41 and the second protruding portion 43. This integrates the external terminal plate 30 and the insulating member 40, and improves, for example, productivity and stability.

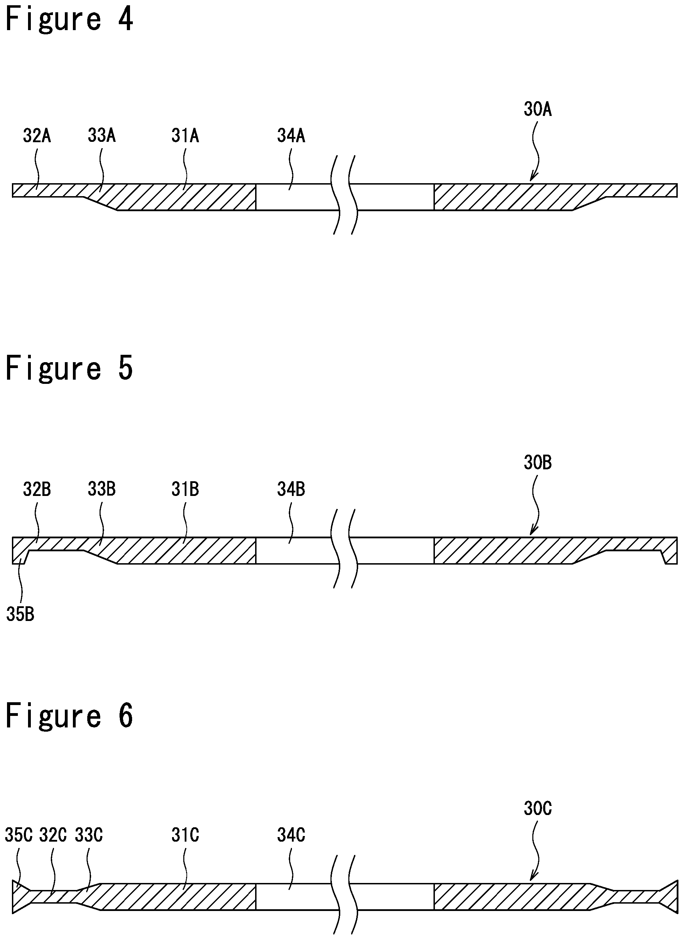

FIGS. 4 to 6 illustrate external terminal plates 30A, 30B, and 30C which are variations of the terminal plate 30. Any one of the external terminal plates 30A, 30B, and 30C can be used for the cylindrical battery 10 instead of the external terminal plate 30.

The external terminal plate 30A illustrated in FIG. 4 is common to the external terminal plate 30 in that a thick portion 31A, a thin portion 32A, an inclined portion 33A, and an opening 34A are provided (this is also true with the external terminal plates 30B and 30C). On the other hand, in the inclined portion 33A where the thickness of the external terminal plate 30A gradually decreases radially outward, a slope is formed only on the lower surface, and the upper surface is flush with the upper surfaces of the thick portion 31 and thin portion 32. In other words, the entire upper surface of the external terminal plate 30A is flat and flush.

Similar to the external terminal plate 30A, the external terminal plate 30B illustrated in FIG. 5 is flat and formed flush over the entire upper surface. On the other hand, it differs from the external terminal plate 30A in that a protruding portion 35B protruding downward is formed on the outer peripheral edge of the external terminal plate 30B. The protruding portion 35B, for example, hooks onto the upper corner of the external can 16 and contributes to improving the stability of the external terminal plate 30B. From the inner peripheral side of the external terminal plate 30B, a thick portion 31B, an inclined portion 33B, a thin portion 32B, and the protruding portion 35B are provided in this order, all formed in a circular ring shape.

The external terminal plate 30C illustrated in FIG. 6 has a protruding portion 35C formed along the outer peripheral edge of the external terminal plate 30C, similar to the external terminal plate 30B. On the other hand, the external terminal plate 30C differs from the external terminal plate 30B in that the protruding portion 35C also protrudes upward from the external terminal plate 30C. The upper and lower surfaces of the external terminal plate 30C are recessed at the thin portion 32C. The external terminal plate 30C can be referred to as having the protruding portion 35B protruding upward and downward from the outer peripheral edge of external terminal plate 30. From the inner peripheral side of the external terminal plate 30C, a thick portion 31C, an inclined portion 33C, a thin portion 32C, and the protruding portion 35C are provided in this order, all formed in a circular ring shape.

As described above, the cylindrical battery 10 includes the external terminal plate 30 having the thick portion 31 and the thin portion 32, and the thin portion 32 is welded or otherwise bonded to the crimping portion 29 of the external can 16. Preferably, the external terminal plate 30 is laser-welded to the external can 16, and by irradiating the thin portion 32 with the laser beam for laser welding, a good weld can be formed even with a lower laser output. As a result, the generation of spatter and the thermal effects on the gasket 28 can be suppressed, and good sealing performance of the sealing assembly 17 can be maintained.

The current-collecting terminal constituting the battery module can be welded to the thick portion 31 of the external terminal plate 30. By providing the external terminal plate 30, the welding area of the current-collecting terminal can be secured without having to extend the crimping portion 29 longer, thus achieving stable connection of the current-collecting terminal while suppressing deformation of the sealing assembly 17. The insulating member 40 interposed between the sealing assembly 17 and the external terminal plate 30 can more securely prevent the contact between the sealing assembly 17 and the external terminal plate 30.

The above embodiment can be designed and modified as necessary to the extent not to impair the purpose of this disclosure. For example, the above embodiment and variations have illustrated the external terminal plate formed in a circular ring shape in plan view, but the external terminal plate may be a metal plate having an arc shape in plan view. Similarly, the planar shape of the insulating member may be in an arc shape in plan view. The external terminal plate may also be a metal plate having a shape other than a circular ring shape or an arc shape in plan view. In that case, it is also preferable that the external terminal plate is disposed not to protrude radially outward from the outer peripheral surface of the external can 16.

For the external terminal plate having an arc shape in plan view, the arc length along the outer peripheral edge is preferably at least 25% of the circumferential length corresponding to the arc shape, but more preferably, the arc length is at least 60% of the circumferential length. In this case, it is easier to stably dispose the external terminal plate on the upper surface of the case. The external terminal plate having an arc shape in plan view also has the thick portion and the thin portion formed on the inner and outer peripheral sides, respectively, so that the external terminal plate does not protrude radially outward from the upper surface of the case. It is also possible to use an external terminal plate that is larger than the upper surface of the case and fits into the top end of the external can, and to bond the external terminal plate to the side top edge located at the opening edge of the external can.

Although the above embodiment has illustrated the case where the sealing assembly 17 functions as the positive external terminal and the external terminal plate 30 functions as the negative external terminal is illustrated, it is also possible to adopt a form in which the external terminal plate 30 serves as the positive external terminal and the sealing assembly 17 as the negative external terminal.

### REFERENCE SIGNS LIST

10 Cylindrical battery
11 Positive electrode
12 Negative electrode
13 Separator
14 Electrode assembly
15 Case
16 External can
17 Sealing assembly
18, 19 Insulating plate
20 Positive electrode lead
21 Negative electrode lead
22 Grooved portion
23 Internal terminal plate
24 Lower valve member
25 Insulating plate
26 Upper valve member
27 Cap
27a Protruding portion
27b Ventilation hole
28 Gasket
28a Extending portion
29 Crimping portion
30 External terminal plate
31 Thick portion
32 Thin portion
33 Inclined portion
34, 44 Opening
40 Insulating member
41 Base portion
42 First protruding portion
43 Second protruding portion

## Claims

1. A cylindrical battery, comprising:
an electrode assembly;
a bottomed cylindrical external can that accommodates the electrode assembly;
a sealing assembly that blocks an opening of the external can;
a gasket that is interposed between the external can and the sealing assembly; and
an external terminal plate that is bonded to the outer surface of the external can, wherein
the external terminal plate is a metal plate having a thick portion and a thin portion, and the thin portion is bonded to an open edge of the external can.

2. The cylindrical battery according to claim 1, wherein
the metal plate has a circular ring shape or an arc shape in plan view.

3. The cylindrical battery according to claim 2, further comprising:
an insulating member having a circular ring shape or an arc shape in plan view and disposed between the sealing assembly and the external terminal plate.

4. The cylindrical battery according to any one of claims 1 to 3, wherein
the external terminal plate is disposed in a state of no protruding outward radially from an outer peripheral surface of the external can.

5. The cylindrical battery according to claim 3, wherein
the gasket has an extending portion extending from between the external can and the sealing assembly, and
the insulating member is disposed overlapping the extending portion.
